# EUROPEAN PATENT SPECIFICATION

(11) **EP 2 498 617 B1**
(45) Date of publication and mention of the grant of the patent: **18.06.2014**
(21) Application number: 10781825.4
(22) Date of filing: 02.11.2010
(51) Int. Cl.: A23D 9/007, A23L 1/236, A23L 1/30, A23L 2/52, A23L 2/60, A23L 1/48

(54) **A COMPOSITION COMPRISING A LIPID SUITABLE FOR HUMAN CONSUMPTION**
ZUSAMMENSETZUNG MIT EINEM ZUM MENSCHLICHEN VERZEHR GEEIGNETEN LIPID
COMPOSITION COMPORTANT UN LIQUIDE ADAPTÉ À LA CONSOMMATION HUMAINE

(30) Priority: 10.11.2009 EP 09014031
(43) Date of publication of application: 19.09.2012
(73) Proprietor: Cognis IP Management GmbH, 40589 Dusseldorf (DE)
(72) Inventor: GIERKE, Jürgen, 89257 Illertissen/Betlinshausen (DE); SCHWAIER, Bettina, 81541 München (DE); PTOCK, Arne, 41472 Neuss (DE); BECK, Katja, 89257 Illertissen/Au (DE)
(86) International application number: PCT/EP2010/006668
(87) International publication number: WO 2011/057731

(56) References cited:
- EP-A1- 0 688 502
- EP-A1- 1 634 502
- WO-A1-00/54838
- WO-A1-02/087349
- WO-A1-03/017774
- WO-A1-2006/008640
- WO-A1-2008/113655
- WO-A2-2007/149590
- US-A1- 2004 237 663
- US-A1- 2006 088 574

## Description

The present invention relates to a composition comprising at least one lipid suitable for human consumption, at least one water soluble sweetener, and at least one solubilizer, wherein water soluble sweetener means that at least 2 g sweetener are soluble in 11 of water at a temperature of 20°C.

Lipids suitable for human consumption with special nutritional value, such as omega-3 rich oils or CLA (conjugated linoleic acid), are frequently formulated in soft gelatine capsules, as emulsions or as pure oils for oral consumption. Oil soluble flavours are frequently added to these supplements in order to improve the taste.

EP 0 688 502 discloses the use of the sugar alcohols xylitol and erythritol to mask the fatty mouth feel of a fat-containing composition.

The problem underlying the present invention is to provide further compositions comprising at least one lipid suitable for human consumption which do not have an unwanted oily or cardboard-like taste or which have an oily or cardboard-like taste that is at least reduced compared to the oily or cardboard-like taste of the pure lipid suitable for human consumption that is comprised in the composition.

This problem is solved by the compositions according to the claims. These compositions are therefore subjects or preferred embodiments of the present invention. The use of a combination of at least one water soluble sweetener as defined in any of the claims and at least one solubilizer as defined in any of the claims and optionally at least one flavour as defined in any of the claims for masking the oily taste of at least one lipid suitable for human consumption as defined in any of the claims is a further subject of the present invention.

According to the present invention a triglyceride is an ester of one molecule of glycerol with three fatty acid molecules. The three fatty acid molecules may be identical or they may be different. Triglycerides are often mixtures of several molecules rather than pure compounds.

A fatty acid according to the present invention can be any fatty acid. In one embodiment of the present invention fatty acid means any fatty acid having 10 to 30 carbon atoms.

An omega-n fatty acid is a fatty acid having at least one double bond. The double bond is between C-atom no. n and n+1 if the C-atom of the methyl-group of the fatty acid is C-atom no. 1. Preferred omega-n fatty acids have 5 or 6 double bonds. In one embodiment of the present invention the omega-n fatty acid is selected from the group consisting of (all-Z)-5,8,11,14,17-eicosapentaenoic acid (EPA) and docosahexaenoic acid (DHA).Omega-n fatty acids can be isolated from fish oil.

CLA is conjugated linoleic acid. It can comprise several isomers. The two most abundant isomers of CLA are cis-9,trans-11-octadecadienoic acid and trans-10,cis-12-octadecadienoic acid. CLA can be made as described in US 6,015,833.

The solubilizer according to the present invention is any solubilizer that increases the solubility of water soluble substances in lipophilic substances. In one embodiment of the present invention the solubilizer according to the present invention is selected from the group consisting of propylene glycol, a polysorbate (E 432 to E 436), a lecithin and a food emulsifier such as sugar esters, polyglycerol esters, mono-diglycerides and esters of mono-diglycerides. In one embodiment of the present invention the solubilizer according to the present invention is propylene glycol.

The addition of water soluble sweeteners to lipids suitable for human consumption improves the acceptance for direct oral consumption of such lipids. The sweeteners mask the oily taste and prevent an oily mouthfeel. The sweeteners work synergistically with other added flavours. Especially after consumption of oil there is an oily coating in the mouth which is an unpleasant taste sensation for the majority of the consumers.

With the combination of sweeteners and flavours it is possible to consume lipids suitable for human consumption in the most concentrated form (pure lipid). There is no need for special formulations such as soft gelatine capsules, emulsions or syrups which only increase costs and also increase the serving size.

The state-of-art formulations are pure lipids with oil soluble flavours. Such formulations have no balanced profile, because human beings expect a sweet taste in combination with fruit-like flavours. Especially children do not accept a flavoured oil that has not a balanced, sweet sensory profile.

The use of propylene glycol is already state of the art for the solubilization of antioxidant formulations in oils or for the solubilization of oil soluble flavours in aqueous matrices. Surprisingly it was found that propylene glycol can also solubilize water soluble sweeteners in lipids suitable for human consumption and give an intense sweet taste to such lipid systems (only poor contact of lipids to the taste buds). Surprisingly it was found that this sweet taste can mask the oily perception of pure lipids at oral consumption. Crystallization or separation of the water soluble compounds in the lipid can be avoided.

The composition according to the present invention can be used in nutritional supplements such as liquid flavoured lipids (in bottles) which are directly consumed via spoon or mixed into food products such as yogurts/cereals etc. Further applications are chewable capsules and formulated supplements such as syrups or emulsions.

The composition according to the present invention can also be applied in all kind of formulated food and beverage products in which a taste masking is needed.

In one embodiment of the present invention the lipid suitable for human consumption is selected from the group consisting of lipids containing omega-3 fatty acids such as fish oil, algae oils or vegetable oils, lipids containing omega-3 / 6 / 9 fatty acids, conjugated linoleic acid rich lipids, sterols and sterol esters, carotenoids and other fat soluble vitamins such as vitamins A, D, E, K and phospholipids.

In one embodiment of the present invention the flavour is selected from the group consisting of a flavour that is associated with a sweet taste profile such as a fruit flavour, vanilla, chocolate, coffee or a confectionery/beverage flavour and combinations thereof

In one embodiment of the present invention the sweetener is any water soluble sweetener such as sucralose (E 955), aspartame (E 951), acesulfame K (E 950), stevia, thaumatin (E 957), neohesperidin DC (E 959), saccharin (E 954), cyclamate (E 952), etc. Preferred sweeteners are sucralose, stevia and thaumatin which exhibit a long lasting sweet taste.

In one embodiment of the present invention the solubilizer is any solubilizer that is oil soluble and that can dissolve water soluble ingredients, a preferred solubilizer is propylene glycol. Other solubilizers are polysorbates (E 432 - E 436), lecithins and other food emulsifiers

The composition according to the present invention can comprise further additives such as food grade antioxidants or food grade colourants. These additives can be used in order to improve the shelf life (antioxidant) or to improve consumer acceptance (carotenoids in an orange flavoured oil to exhibit same colour as orange juice).

In one embodiment of the present invention the composition according to the present invention has the following composition (in % by weight): 0.01 % sucralose, 0.09 % propylene glycol, 0.25 % orange flavour oil soluble, 99.65 % CLA-triglyceride.

In one embodiment of the present invention the composition according to the present invention has the following composition (in % by weight): 0.001-0.5 % sweetener (e. g. sucralose), 0.01-2 % solubilizer (e. g. propylene glycol), 0.01-2 % flavour and 95.5-99.97 % lipid.

The composition according to the present invention may be made according to the following process. The sweetener is dissolved in propylene glycol preferably at a temperature of 40 to 80°C. This solution is cooled down to ambient temperature. Flavour and sweetener are blended and the blend is dissolved in oil at ambient temperatures. Alternatively the warm sweetener solution in propylene glycol can be blended directly into the oil.

### Examples

Formulations tested (amounts in % by weight) and results obtained:

| Formulation | BK121 | BK122 | BK123 | BK124 | BK125 | BK126 | BK127 | BK128 | BK129 |
|---|---|---|---|---|---|---|---|---|---|
| Sucralose | 0.005 | 0.005 | 0.005 | 0.01 | 0.01 | 0.01 | 0.025 | 0.025 | 0.025 |
| Propylene glycol | 0.095 | 0.095 | 0.095 | 0.09 | 0.09 | 0.09 | 0.075 | 0.075 | 0.075 |
| Flavour | 0 | 0.25 | 0.5 | 0 | 0.25 | 0.5 | 0 | 0.25 | 0.5 |
| Tonalin^{®} TG 80 | 99.90 | 99.65 | 99.40 | 99.90 | 99.65 | 99.40 | 99.90 | 99.65 | 99.40 |
| taste evaluation | | | | | | | | | |
| rancidity (control = 0.5) | 0.25 | 0.13 | 0.13 | 0.25 | 0.13 | 0.13 | 0.25 | 0 | 0 |
| Oily, cardboard (control = 1.9) | 1.00 | 0.63 | 0.25 | 0.63 | 0.38 | 0.38 | 0.38 | 0.33 | 0.17 |
| sweetness (control = 0.0) | 1.00 | 0.88 | 1.13 | 1.75 | 1.50 | 2.00 | 1.88 | 2.17 | 2.67 |

| | | | | | | | | | |
|---|---|---|---|---|---|---|---|---|---|
| Control was pure Tonalin^{®} TG 80 Flavour used: Saftorange Typ 08368AV, obtainable from the German company Curt Georgi Sucralose was obtained from the company Tate & Lyle, UK Tonalin^{®} TG 80 was obtained from Cognis GmbH, Monheim, Germany Tonalin TG 80 is a triglyceride comprising about 80 % (area-% determined by gas chromatography) conjugated linoleic acid moieties (of all fatty acid moieties present); the conjugated linoleic acid is a 1:1-mixture of cis9,trans 11-octadecadienoic acid and trans 1 0,cis 12-octadecadienoic acid | | | | | | | | | |

Sensory evaluation was carried out after 7 days of storage.

### Scores:

0 = no taste
1 = significant taste perception
2 = strong taste perception
3 = very strong taste

All samples with the sweetener solution showed a significant reduction in oily, cardboard and rancid taste. The dosage of 0.005 % by weight sucralose resulted in a significant sweet taste. Dosages of 0.01 % by weight - 0.025 % by weight resulted in a strong sweet taste profile. Typical soft drink formulations contain approximately 0.02 % by weight of sucralose. I. e. the dosage tested is comparable to beverage products.

An increase in flavour concentration at constant sucralose concentration resulted in increased sweetness and in a reduced oily flavour. This shows a synergistic effect of the combination of sucralose and flavour. In order to reduce oily taste it is possible to increase the concentration of sucralose (BK121 to BK124) or to add flavour (BK121 to BK122).

## Claims

1. A composition comprising
• at least one lipid suitable for human consumption at a concentration of 94 to 99.9945% by weight,
• at least one water soluble sweetener at a concentration of 0.0005 to 1.0 % by weight of the at least one lipid, and
• at least one solubilizer,
wherein water soluble sweetener means that at least 2 g sweetener are soluble in 11 of water at a temperature of 20 °C.

2. The composition according to claim 1, wherein the at least one lipid suitable for human consumption is a triglyceride of a fatty acid.

3. The composition according to claim 2, wherein the triglyceride of a fatty acid is selected from the group consisting of
• a triglyceride comprising at least 50 % by weight, of all fatty acid moieties of the triglyceride, conjugated linoleic acid moieties selected from the group consisting of cis9,trans11-octadecadienoic acid and trans10,cis12-octadecadienoic acid and a mixture of cis9 ,trans 11-octadecadienoic acid and trans 10,cis 12-octadecadienoic add and
• a triglyceride comprising at least one acyl moiety derived from an omega-n fatty acid, n being 3, 6 or 9 (preferably n is 3).

4. The composition according to any of claims 1 to 3, wherein the at least one water soluble sweetener is selected from the group consisting of sucralose (E 955), aspartame (E 951 ), acesulfame K (E 950), stevioside, thaumatin (E 957), neohesperidin DC (E 959), saccharin (E 954) and cyclamate (E 952), preferably selected from the group consisting of sucralose, stevioside and thaumatin.

5. The composition according to any of claims 1 to 4 comprising the at least one water soluble sweetener at a concentration 0.001 to 0.5% by weight of the at least one lipid.

6. The composition according to any of claims 1 to 5 comprising the at least one solubilizerat a concentration of 0.005 to 5.0% by weight (preferably 0.01 to 2 % by weight) of the at least one lipid.

7. The composition according to any of claims 1 to 6 further comprising at least one compound selected from the group consisting of a phytosterol, a phytosterol ester, a carotenoid (preferably beta-carotin, lutein, zeaxanthin or lycopen in free form or in ester form), a fat soluble vitamin (preferably selected from the group consisting of vitamin A, D, E and K) and a phospholipid.

8. The composition according to any of claims 1 to 7 further comprising at least one flavour.

9. The composition according to claim 8, wherein the at least one flavour is a flavour suitable for flavouring food, preferably at a concentration of 0.001 to 5% by weight, more preferably at a concentration of 0.01 to 2% by weight.

10. The composition according to any of claims 1 to 9 further comprising at least one additive selected from the group consisting of antioxidants and colorants, wherein the antioxidant is preferably selected from the group consisting of tocopherols, rosemary extracts and ascorbyl esters, preferably at a concentration of 0.01-0.5% by weight, and wherein the colorant is a colorant suitable for coloring food, preferably at a concentration of 0.2 mg/g to 200 mg/g.

11. The use of a combination of at least one water soluble sweetener as defined in any of the preceding claims and at least one solubilizer as defined in any of the preceding claims and optionally at least one flavour as defined in any of the preceding claims for masking the oily taste of at least one lipid suitable for human consumption as defined in any of the preceding claims.

12. The composition according to any of claims 1 to 4, comprising the at least one lipid suitable for human consumption at a concentration of 94 to 99.9945% by weight and the at least one water soluble sweetener at a concentration of 0.0005 to 1.0 %by weight (preferably 0.001 to 0.5% by weight) of the at least one lipid and the at least one solubilizer at a concentration of 0.005 to 5.0% by weight (preferably 0.01 to 2% by weight) of the at least one lipid.

## Patentansprüche

1. Zusammensetzung, die Folgendes umfasst:
• mindestens ein für die menschliche Ernährung geeignetes Lipid in einer Konzentration von 94-99,9945 Gew.-%,
• mindestens einen wasserlöslichen Süßstoff in einer Konzentration von 0,0005 bis 1,0 Gew.-% des mindestens einen Lipids, und
• mindestens ein Hilfslösungsmittel,
wobei wasserlöslicher Süßstoff bedeutet, dass mindestens 2 g Süßstoff in 1 1 Wasser bei einer Temperatur von 20°C löslich sind.

2. Zusammensetzung nach Anspruch 1, wobei es sich bei dem mindestens einen für die menschliche Ernährung geeigneten Lipid um ein Fettsäuretriglycerid handelt.

3. Zusammensetzung nach Anspruch 2, wobei das Fettsäuretriglycerid aus der Gruppe bestehend aus den Folgenden ausgewählt ist:
• einem Triglycerid, das mindestens 50 Gew.-% aller Fettsäurereste des Triglycerids an konjugierten Linolsäureresten, ausgewählt aus der Gruppe bestehend aus cis9,trans11-Octadecadiensäure und trans10,cis12-Octadecadiensäure und einer Mischung aus cis9,trans11-Octadecadiensäure und trans10,cis12-Octadecadiensäure, umfasst und
• ein Triglycerid, das mindestens einen Acylrest umfasst, der von einer Omega-n-Fettsäure stammt, wobei n 3, 6 oder 9 beträgt (vorzugsweise 3 beträgt).

4. Zusammensetzung nach einem der Ansprüche 1 bis 3, wobei der mindestens eine wasserlösliche Süßstoff aus der Gruppe bestehend aus Sucralose (E 955), Aspartam (E 951), Acesulfam K (E 950), Steviosid, Thaumatin (E 957), Neohesperidin DC (E 959), Saccharin (E 954) und Cyclamat (E 952) ausgewählt ist und vorzugsweise aus der Gruppe bestehend aus Sucralose, Steviosid und Thaumatin ausgewählt ist.

5. Zusammensetzung nach einem der Ansprüche 1 bis 4, die den mindestens einen wasserlöslichen Süßstoff in einer Konzentration von 0,001 bis 0,5 Gew.-% des mindestens einen Lipids umfasst.

6. Zusammensetzung nach einem der Ansprüche 1 bis 5, die das mindestens eine Hilfslösungsmittel in einer Konzentration von 0,005 bis 5,0 Gew.-% (vorzugsweise 0,01 bis 2 Gew.-%) des mindestens einen Lipids umfasst.

7. Zusammensetzung nach einem der Ansprüche 1 bis 6, die weiterhin mindestens eine Verbindung, ausgewählt aus der Gruppe bestehend aus einem Phytosterol, einem Phytosterolester, einem Carotinoid (vorzugsweise beta-Carotin, Lutein, Zeaxanthin oder Lycopen in freier Form oder in Esterform), einem fettlöslichen Vitamin (das vorzugsweise aus der Gruppe bestehend aus Vitamin A, D, E und K ausgewählt ist) und einem Phospholipid, umfasst.

8. Zusammensetzung nach einem der Ansprüche 1 bis 7, die weiterhin mindestens einen Aromastoff umfasst.

9. Zusammensetzung nach Anspruch 8, wobei es sich bei dem mindestens einen Aromastoff um einen Geschmacksstoff, der sich für die Aromatisierung von Nahrungsmitteln, vorzugsweise in einer Konzentration von 0,001 bis 5 Gew.-%, stärker bevorzugt in einer Konzentration von 0,01 bis 2 Gew.-%, eignet.

10. Zusammensetzung nach einem der Ansprüche 1 bis 9, die weiterhin mindestens einen Zusatzstoff, ausgewählt aus der Gruppe bestehend aus Antioxidationsmitteln und Farbstoffen, umfasst, wobei das Antioxidationsmittel vorzugsweise aus der Gruppe bestehend aus Tocopherolen, Rosmarinextrakten und Ascorbylestern, vorzugsweise in einer Konzentration von 0,01-0,5 Gew.-%, ausgewählt ist, und wobei es sich bei dem Farbstoff um einen für das Färben von Nahrungsmitteln geeigneten Farbstoff, vorzugsweise in einer Konzentration von 0,2 mg/g bis 200 mg/g handelt.

11. Verwendung einer Kombination von mindestens einem wasserlöslichen Süßstoff wie in einem der vorhergehenden Ansprüche definiert und mindestens einem Hilfslösungsmittel wie in einem der vorhergehenden Ansprüche definiert und fakultativ mindestens einem Aromastoff wie in einem der vorhergehenden Ansprüche definiert zum Maskieren des öligen Geschmacks von mindestens einem für die menschliche Ernährung geeigneten Lipid wie in einem der vorhergehenden Ansprüche definiert.

12. Zusammensetzung nach einem der Ansprüche 1 bis 4, die mindestens ein für die menschliche Ernährung geeignetes Lipid in einer Konzentration von 94 bis 99,9945 Gew.-% und mindestens einen wasserlöslichen Süßstoff in einer Konzentration von 0,0005 bis 1,0 Gew.-% (vorzugsweise 0,001 bis 0,5 Gew.-%) des mindestens einen Lipids und das mindestens eine Hilfslösungsmittel in einer Konzentration von 0,005 bis 5,0 Gew.-% (vorzugsweise 0,01 bis 2 Gew.-%) des mindestens einen Lipids umfasst.

## Revendications

1. Composition comprenant
- au moins un lipide convenable pour une consommation par l'homme selon une concentration allant de 94 à 99,9945% en poids,
- au moins un édulcorant hydrosoluble selon une concentration allant de 0,0005 à 1,0% en poids du au moins un lipide, et
- au moins un agent solubilisant,
dans laquelle le terme « édulcorant hydrosoluble » signifie qu'au moins 2 g d'édulcorant sont solubles dans 1 1 d'eau à une température de 20°C.

2. Composition selon la revendication 1, dans laquelle le au moins un lipide convenable pour une consommation par l'homme est un triglycéride d'un acide gras.

3. Composition selon la revendication 2, dans laquelle le triglycéride d'un acide gras est choisi dans le groupe constitué par
- un triglycéride comprenant au moins 50% en poids, de tous les motifs d'acides gras du triglycéride, de motifs d'acide linoléique conjugués choisis dans le groupe constitué par l'acide cis-9,trans-11-octadécadiénoïque et l'acide trans-10,cis-12- octadéca-diénoïque et un mélange d'acide cis-9,trans-11-octadécadiénoïque et d'acide trans-10,cis-12- octadéca-diénoïque, et
- un triglycéride comprenant au moins un motif acyle dérivé d'un acide gras oméga-n, n valant 3, 6 ou 9 (préférablement n vaut 3).

4. Composition selon l'une quelconque des revendications 1 à 3, dans laquelle le au moins un édulcorant hydrosoluble est choisi dans le groupe constitué par le sucralose (E 955), l'aspartame (E 951), l'acésulfame K (E 950), le stévioside, la thaumatine (E 957), la néohespéridine DC (E 959), la saccharine (E 954) et le cyclamate (E 952), préférablement choisi dans le groupe constitué par le sucralose, le stévioside et la thaumatine.

5. Composition selon l'une quelconque des revendications 1 à 4, comprenant le au moins un édulcorant hydrosoluble selon une concentration allant de 0,001 à 0,5% en poids du au moins un lipide.

6. Composition selon l'une quelconque des revendications 1 à 5, comprenant le au moins un agent solubilisant selon une concentration allant de 0,005 à 5,0% en poids (préférablement de 0,01 à 2% en poids) du au moins un lipide.

7. Composition selon l'une quelconque des revendications 1 à 6, comprenant en outre au moins un composé choisi dans le groupe constitué par un phytostérol, un ester de phytostérol, un caroténoïde (préférablement le bêta-carotène, la lutéine, la zéaxanthine ou le lycopène sous forme libre ou sous forme d'ester), une vitamine liposoluble (choisie de préférence dans le groupe constitué par la vitamine A, D, E et K) et un phospholipide.

8. Composition selon l'une quelconque des revendications 1 à 7, comprenant en outre au moins un arôme.

9. Composition selon la revendication 8, dans laquelle le au moins un arôme est un arôme convenable pour aromatiser des aliments, préférablement selon une concentration allant de 0,001 à 5% en poids, plus préférablement selon une concentration allant de 0,01 à 2% en poids.

10. Composition selon l'une quelconque des revendications 1 à 9, comprenant en outre au moins un additif choisi dans le groupe constitué par les antioxydants et les colorants, où l'antioxydant est choisi de préférence dans le groupe constitué par les tocophérols, les extraits de romarin et les esters d'ascorbyle, préférablement selon une concentration de 0,01-0,5% en poids, et où le colorant est un colorant convenable pour la coloration d'aliments, préférablement selon une concentration allant de 0,2 mg/g à 200 mg/g.

11. Utilisation d'une combinaison d'au moins un édulcorant hydrosoluble tel que défini selon l'une quelconque des revendications précédentes, et d'au moins un agent solubilisant tel que défini selon l'une quelconque des revendications précédentes, et éventuellement d'au moins un arôme tel que défini selon l'une quelconque des revendications précédentes, pour masquer le goût huileux d'au moins un lipide convenable pour une consommation par l'homme tel que défini selon l'une quelconque des revendications précédentes.

12. Composition selon l'une quelconque des revendications 1 à 4, comprenant au moins un lipide convenable pour une consommation par l'homme selon une concentration allant de 94 à 99,9945% en poids, et le au moins un édulcorant hydrosoluble selon une concentration allant de 0,0005 à 1,0% en poids (préférablement de 0,001 à 0,5% en poids) du au moins un lipide, et le au moins un agent solubilisant selon une concentration allant de 0,005 à 5,0% en poids (préférablement de 0,01 à 2% en poids) du au moins un lipide.
